# DEMANDE DE BREVET EUROPEEN

(11) **EP 1 522 453 A1**
(43) Date de publication de la demande: **13.04.2005**
(21) Numéro de dépôt: 04370027.7
(22) Date de dépôt: 14.09.2004
(51) Int. Cl.: B60N 3/04

(54) **Procédé de fabrication d'un tapis de protection pour véhicule automobile et tapis de protection obtenu**

(30) Priorité: 17.09.2003 FR 0310936
(71) Demandeur: Gery Trentesaux Industries, S.A., 59100 Roubaix (FR)
(72) Inventeur: Lepoutre, Boris, 59290 Wasquehal (FR)
(74) Mandataire: Hennion, Jean-Claude

(57) **Abrégé**

Le procédé concerne la fabrication d'un tapis de protection de véhicule automobile équipé d'un revêtement de première monte, et comportant sur sa face envers un moyen d' accrochage. Il comporte deux opérations mettant en oeuvre un même outil compressif , à savoir une opération sur la face endroit de formation d'un relief en creux (6,7) et/ou de pose d'une pièce de renfort (5), notamment une talonnette (4) , et une opération sur la face envers de pose du moyen d'accrochage, qui peut par exemple consister en une bande adhésive double face protégée par une bande protectrice enlevable (11).

Dans un mode particulier de mise en oeuvre du procédé, le tapis de protection comporte sur sa face endroit une talonnette (4) et sur sa face envers comme moyen d'accrochage avec le revêtement de première monte du véhicule automobile , une bande adhésive (8) recouverte d'une bande protectrice enlevable (11), ladite bande adhésive (8) étant localisée exclusivement sous l'emplacement de la talonnette (4).

## Description

La présente invention concerne le domaine des tapis de protection pour véhicule automobile équipé d'un revêtement de première monte, lequel tapis comporte sur sa face envers un moyen d'accrochage destiné à être en prise sur le revêtement de première monte et éviter le glissement du tapis.

Les véhicules automobiles à l'état neuf sont toujours équipés d'un revêtement dit de première monte , du type moquette, qui recouvre la partie basse de l'habitacle. Pour éviter de salir ce revêtement de première monte, ce qui est préjudiciable lors de la revente du véhicule , il est habituel de placer sur ce revêtement un tapis de protection, au moins devant le siège du conducteur et également du passager avant, voire également à l'arrière et dans le coffre.

Ce tapis de protection est soumis aux divers mouvements des pieds de l'usager et peut , de ce fait , être amené à se déplacer sous l'action de ces divers mouvements. Un tel déplacement peut être particulièrement gênant lorsqu'il s'agit du tapis qui se trouve sous les pieds du conducteur du fait qu'il peut être une gêne pour l'actionnement des pédales.

Pour résoudre cette difficulté , il est connu de disposer , sur la face envers du tapis , c'est-à-dire celle qui est en contact avec le revêtement de première monte , un moyen d'accrochage qui empêche un tel déplacement. Ce moyen d'accrochage peut être un moyen mécanique, par exemple une pièce rapportée pourvue de griffes. Il peut également s'agir d'un matériau disposé sur la face envers du tapis de protection et dont l'état de surface permet cet accrochage avec la face du revêtement de première monte avec laquelle il est en contact. Ce matériau peut notamment être du type caoutchouc, avec un aspect extérieur grenelé. Cependant l'efficacité des moyens d'accrochage précités, que ce soit des moyens mécaniques du type griffes ou que ce soit un matériau antidérapant, dépend largement du type de revêtement de première monte. En effet, si l'efficacité est bonne lorsqu'il s'agit d'une moquette à boucles du type aiguilleté, ceci n'est plus du tout le cas lorsqu'il s'agit d'une moquette du type velours, voire une moquette tuftée.

On a déjà proposé , par le document FR.2.810.002, de disposer sur la face envers du tapis de protection un matériau à coefficient de frottement élevé, notamment un matériau adhésif repositionnable. Dans l'exemple préféré de réalisation donné dans ce document , il s'agit d'une grille qui présente un revêtement extérieur adhésif repositionnable et qui est fixée selon le bord périphérique de la face envers du tapis lors de l'opération de finition de la lisière. D'une part ceci rend plus complexe la fabrication du tapis de protection. D'autre part il devient nécessaire que la grille adhésive recouvre l'ensemble de la face envers du tapis.

La présente invention concerne un procédé de fabrication d'un tapis de protection de fabrication plus simple.

Ce procédé s'applique à un tapis de protection de véhicule automobile équipé d'un revêtement de première monte , ledit tapis comportant sur sa face envers un moyen d'accrochage.

Selon l'invention, le procédé comporte deux opérations mettant en oeuvre un même outil compressif , à savoir une opération sur la face endroit de formation d'un relief en creux et/ou de pose d'une pièce de renfort, notamment une talonnette et une opération sur la face envers de pose du moyen d'accrochage.

Ainsi la pose du moyen d'accrochage sur la face envers du tapis est réalisée avec le même outil compressif qui sert à former un décor présentant des reliefs en creux et/ou à poser localement un élément de renfort sur la face endroit du tapis. Cet élément de renfort est par exemple une talonnette destinée à venir sous les pieds du conducteur au niveau des pédales ou tout autre type d'élément destiné à renforcer voire protéger localement le tapis.

Le moyen d'accrochage peut consister en une bande adhésive dont la couche adhésive est protégée par une bande protectrice enlevable. Cette bande protectrice est enlevée par l'utilisateur juste avant qu'il ne place son tapis de protection sur le revêtement de première monte. Dans ce cas , lors de l'opération de pose de cette bande adhésive , la fixation de l'ensemble constitué par la superposition de la bande adhésive et de la bande protectrice sur la face envers du tapis peut être obtenue grâce à une seconde couche adhésive sur l'autre face de la bande adhésive. Elle peut éventuellement être obtenue grâce à la fusion localisée du matériau formant la bande adhésive , l'outil compressif étant alors de préférence un outil de soudure hautes fréquences. Il peut également s'agir de la combinaison des deux caractéristiques précitées à savoir la mise en oeuvre d'une bande adhésive double face et d'un outil compressif du type soudure par hautes fréquences , ce qui permet d'avoir une fixation particulièrement solide de la bande adhésive sur la face envers du tapis.

L'ensemble constitué par la superposition de la bande adhésive et de la bande protectrice peut être préalablement découpé à la taille requise mais le procédé de l'invention peut également comporter une opération de découpe automatique de cet ensemble bande adhésive/bande protectrice, mettant en oeuvre un outil de découpe en complément de l'outil compressif. Ceci permet un placement plus approximatif de l'ensemble bande adhésive/bande protectrice par l'opérateur.

C'est un autre objet de l'invention que de proposer un tapis de protection de véhicule automobile qui comporte sur sa face endroit une talonnette et sur sa face envers , comme moyen d'accrochage avec le revêtement de première monte du véhicule automobile , une bande adhésive recouverte d'une bande protectrice enlevable, ladite bande adhésive étant localisée exclusivement sous l'emplacement de la talonnette.

Cette disposition particulière permet une réduction des coûts par rapport au tapis décrit dans le document FR.2.810.002, ne mettant en oeuvre qu'une surface réduite de bande adhésive par rapport à la surface totale du tapis, tout en gardant une très bonne efficacité d'accrochage. En effet le conducteur a de manière quasi-constante au moins un pied appliqué sur la talonnette. De ce fait , il s'exerce à cet endroit une pression qui renforce le pouvoir d'adhésion de la bande adhésive avec le revêtement de première monte, avec en particulier une meilleure pénétration de l'adhésif dans les fibres du revêtement de protection.

Dans une variante de réalisation , la bande adhésive a strictement la configuration inversée de la talonnette.

La présente invention et les avantages qu'elle procure seront mieux compris à la lecture de la description d'un exemple préféré de fabrication d'un tapis de protection pour véhicules automobiles illustré par le dessin annexé dans lequel :
La figure 1 est une représentation schématique partielle de la face endroit d'un tapis comportant une talonnette,
La figure 2 est une représentation schématique partielle de la face envers du tapis de la figure 1 et
La figure 3 est une représentation en coupe du tapis de la figure 2 selon l'axe III-III.

Le tapis de protection dont il s'agit dans la présente invention est un tapis qui est destiné à protéger le revêtement de première monte d'un véhicule automobile. L'exemple détaillé et illustré concerne un tapis destiné à être placé sous les pieds du conducteur , avec une talonnette disposée dans la zone des pédales. Ceci n'est cependant pas exclusif de la présente invention.

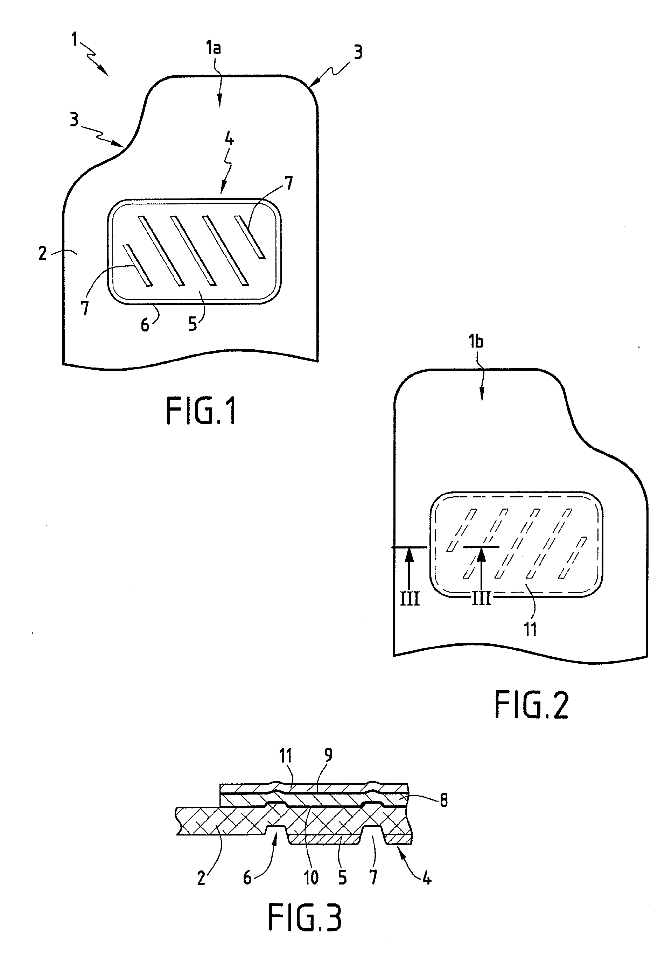

Le tapis 1 , illustré à la figure 1 , est constitué d'une pièce de base 2 globalement rectangulaire , avec des découpes 3 permettant son adaptation à la configuration intérieure de l'habitacle où il est placé. Cette pièce 2 qui forme la base du tapis 1 est constituée de matière textile , par exemple à base de fibres aiguilletées. La lisière périphérique de cette pièce peut présenter une finition sous forme d'un surjet. Ce tapis 1 comporte une talonnette 4 qui est constituée par une pièce de renfort 5 rapportée sur la face endroit de la pièce de base 2.

Plus précisément , lors de la fabrication du tapis 1 , la pièce de renfort 5 est fixée sur la pièce de base 2 grâce à la mise en oeuvre d'un outil compressif. Généralement il s'agit d'une fixation par soudure par l'action de hautes fréquences, la pièce de renfort 5 étant réalisée dans un matériau apte à s'échauffer sous l'action d'un rayonnement hautes fréquences. La fusion localisée combinée à une mise sous pression permet la fixation de la pièce de renfort 5 sur la pièce de base 2 pour former une talonnette 4.

Sur la figure 1 apparaissent très nettement les zones de compression 6,7 de l'outil, qui en pratique se matérialisent par un effet de relief en creux apparaissant sur la face endroit 1a du tapis 1.

Plus précisément , dans l'exemple illustré , la compression a lieu dans une première zone 6 qui est formée selon tout le contour périphérique de la talonnette 4 et dans des secondes zones 7 constituées par des lignages obliques disposés à l'intérieur de la première zone 6. Ces secondes zones permettent de compléter la fixation de la pièce de renfort 5, tout en créant un aspect décoratif pour la talonnette 4.

On comprend qu'indépendamment de la pose d'une pièce de renfort 5 pour former la talonnette 4 , un outil de compression peut également être mis en oeuvre uniquement pour former un décor sur la face endroit 1a du tapis 1.

La face envers 1b du tapis 1 comporte un moyen d'accrochage permettant d'éviter le glissement ou déplacement du tapis 1 sur le revêtement de première monte du véhicule, déplacement ou glissement dû notamment aux mouvements du pied de l'usager.

Selon l'invention , ce moyen d'accrochage est posé sur la face envers 1b grâce à la mise en oeuvre du même outil compressif que celui qui permet soit de réaliser la pose de la pièce de renfort 5 pour former la talonnette 4 soit de former simplement des reliefs en creux.

Dans l'exemple illustré aux figures 2 et 3 , ce moyen d'accrochage est constitué par une bande adhésive 8 , présentant sur ses deux faces une couche adhésive respectivement 9, 10. Cette bande 8 est notamment une bande tissée dans un matériau synthétique réagissant à l'action d'un rayonnement hautes fréquences.

Une bande protectrice 11, anti-adhérente, est placée sur la première couche adhésive 9 de la bande 8.

La fixation de l'ensemble constitué par la bande adhésive 8 et la bande protectrice 11 sur la face envers 1b du tapis 1 est réalisée en mettant en oeuvre le même outil compressif que celui qui sert à la pose de la talonnette 4. Pour cela , l' ensemble bande adhésive/bande protectrice est placé de sorte que la seconde couche adhésive 10 soit appliquée sur la face envers du tapis, ledit ensemble bande adhésive/bande protectrice ayant la même configuration extérieure inversée , éventuellement légèrement surdimensionnée , que la talonnette 4. Lors de l'action de l'outil compressif, l'adhésif de la seconde couche 10 s'incruste dans les fibres de la pièce de base 2. De plus l'action éventuelle des hautes fréquences permet d'avoir une fusion localisée du matériau constituant la bande 8 , cette fusion localisée alliée à la compression augmente la fixation de la bande 8 sur la pièce de base 2 dans les zones de compression 6 , 7.

De préférence les deux opérations de pose de la pièce de renfort 5 sur la face endroit la et de pose de l'ensemble bande adhésive/bande protectrice sur la face envers 1b sont réalisées en une seule opération mettant en oeuvre l'outil compressif.

Dans l'exemple illustré aux figures 1 et 2, la bande adhésive 8 a strictement la même configuration que la talonnette 4, celle-ci étant parfaitement symétrique. Cependant les lignages en creux 7 ont une direction qui , vue de la face envers 1b, apparaît inversée par rapport à celle qu'ils ont sur la face endroit 1a.

La présente invention n'est pas limitée au mode de réalisation décrit ci-dessus à titre d'exemple. En particulier, elle concerne également des tapis qui sont exempts de talonnette mais qui sont équipés de pièces de renfort ou de protection rapportées sur la face avant ou qui présentent des reliefs en creux, mettant en oeuvre un outil compressif. De plus le moyen d'accrochage, et notamment la bande adhésive peut avoir une dimension différente de celle de la talonnette ou de la pièce rapportée sur la face avant ; il suffit que la fixation du moyen d'accrochage, notamment la bande adhésive , sur la face envers soit obtenue grâce à l'action de l'outil de compression.

## Revendications

1. Procédé de fabrication d'un tapis de protection de véhicule automobile équipé d'un revêtement de première monte, ledit tapis comportant sur sa face envers un moyen d'accrochage, **caractérisé en ce qu'**il comporte deux opérations mettant en oeuvre un même outil compressif , à savoir une opération sur la face endroit (1a) de formation d'un relief en creux (6,7) et/ou de pose d'une pièce de renfort (5), notamment une talonnette (4), et une opération sur la face envers (1b) de pose du moyen d'accrochage.

2. Procédé selon la revendication 1 **caractérisé en ce que** , le moyen d'accrochage consistant en une bande adhésive dont la couche adhésive (9) est protégée par une bande protectrice enlevable (11), la fixation de la bande adhésive (8) sur la face envers (1b) du tapis
(1) est obtenue grâce à une seconde couche adhésive (10) sur l' autre face de la bande adhésive.

3. Procédé selon l'une des revendications 1 ou 2 **caractérisé en ce que** la fixation de la bande adhésive (8) sur la face envers (1b) du tapis
(1) est obtenue grâce à la fusion localisée du matériau formant la bande adhésive (8), l'outil compressif étant alors de préférence un outil de soudure hautes fréquences.

4. Procédé selon l'une des revendications 2 ou 3 **caractérisé en ce que** l'ensemble constitué par la superposition de la bande adhésive (8) et de la bande protectrice (11) est préalablement découpé à la taille requise.

5. Procédé selon l'une des revendications 2 ou 3 **caractérisé en ce qu'**il comporte une opération de découpe automatique de l'ensemble bande adhésive/bande protectrice, mettant en oeuvre un outil de découpe associé à l'outil compressif.

6. Tapis de protection (4) de véhicule automobile qui comporte sur sa face endroit (1a) une talonnette (4) et sur sa face envers (1a), comme moyen d'accrochage avec le revêtement de première monte du véhicule automobile, une bande adhésive (8) recouverte d'une bande protectrice enlevable (11), ladite bande adhésive (8) étant localisée exclusivement sous l'emplacement de la talonnette (4).

7. Tapis selon la revendication 6 **caractérisé en ce que** l'ensemble bande adhésive/bande protectrice a strictement la configuration inversée de la talonnette.
